(19) Europäisches Patentamt
European Patent Office
Office européen des brevets

(11) Publication number: 0 284 873 B1

(12) EUROPEAN PATENT SPECIFICATION

(45) Date of publication of patent specification: 01.09.93 (51) Int. Cl.5: C07F 7/12, C07F 7/08

(21) Application number: 88104062.0

(22) Date of filing: 15.03.88

# (54) Silylation method.

(30) Priority: 03.04.87 US 33567

(43) Date of publication of application:
05.10.88 Bulletin 88/40

(45) Publication of the grant of the patent:
01.09.93 Bulletin 93/35

(84) Designated Contracting States:
DE ES FR GB

(56) References cited:
GB-A- 2 164 041
US-A- 4 474 976

JOURNAL OF ORGANOMETALLIC CHEMISTRY, vol. 87, no. 9, 18 March 1975, Elsevier Sequoia SA, Lausanne (CH); K.G. ALLUM et al., pp. 203-216&NUM;

CHEMICAL REVIEWS, vol. 81, no. 2, April 1981, American Chemical Society; D.C. BAILEY et al., pp. 109-148&NUM;

(73) Proprietor: GENERAL ELECTRIC COMPANY
1 River Road
Schenectady New York 12305(US)

(72) Inventor: Rich, Jonathan David
11 Fairway Lane
Rexford, NY 12148(US)

(74) Representative: Pratt, Richard Wilson
London Patent Operation G.E. Technical Services Co. Inc. Essex House 12/13 Essex Street
London WC2R 3AA (GB)

EP 0 284 873 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

US-A-4,709,054 describes a method for silylating aromatic acylhalide with halogenated polysilane in the presence of an effective amount of a transition metal catalyst. As shown by Yamamoto et al., Tetrahedron Letters, 1653 (1980) activated aromatic acylhalide, such as para-nitrobenzoylchloride, can be converted to the corresponding aromatic silane with a loss of carbon monoxide as a result of a decarbonylation reaction utilizing hexamethyldisilane as the silylating reactant. It was found, however, that the silylation of the aromatic nucleus using hexamethyl disilane, resulted in only a minor amount of the desired aromatic silane, such as a paranitrophenyltrimethylsilane, while the major product was the corresponding aromatic silylketone.

In US-A-4,709,054, there is taught that if halogenated polysilane of the formula,

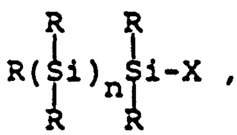 (1)

is reacted with aromatic acylhalide of the formula,

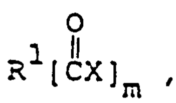 (2)

in the presence of an effective amount of a transition metal catalyst, a wide variety of aromatic silylation reaction products can be obtained at high yields resulting in the production of nuclear-bound carbon-silicon bonds, where X is a halogen radical, R is selected from X, hydrogen, $C_{(1-13)}$ monovalent hydrocarbon radicals, substituted $C_{(1-13)}$ monovalent hydrocarbon radicals, and divalent -O-, -S-radicals and mixtures thereof which can form ≡SiOSi≡ and ≡SiSSi≡ connecting groups, $R^1$ is a $C_{(6-20)}$ monovalent or polyvalent aromatic organic radical, n is an integer equal to 1 to 50 inclusive, and m is an integer equal to 1 to 4 inclusive.

Although the method of US-A-4,709,054 provides for the production of organic silanes and silarylenes at high yields, it has been found difficult to recycle, regenerate or salvage transition metal catalyst values from the reaction mixture.

In addition, in instances where halogenated polysilane of the formula is used as a reactant,

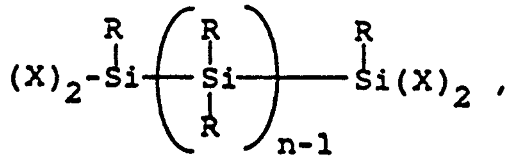 (3)

where R, X and n are as previously defined, reaction can occur between the halogenated polysilane and the transition metal catalyst if a phosphine cocatalyst is used, resulting in reduced yield of nuclear-bound carbon-silicon bonds.

The present invention is based on my discovery that a wide variety of silylated aromatic reaction products having one or more nuclear-bound silicon atoms joined to an aromatic nucleus by carbon-silicon bonds can be made by effecting reaction between halogenated polysilane of formula (1) and aromatic acylhalide of formula (2) in the presence of an effective amount of a supported transition metal complex having chemically combined groups of the formula,

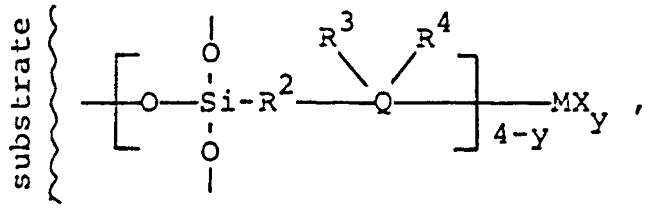

(4)

where $R^2$ is a divalent $C_{(2-14)}$ organic radical, Q is a nitrogen or phosphorous radical, $R^3$ and $R^4$ are monovalent $C_{(1-14)}$ alkyl or aryl radicals, M is a transition metal selected from palladium, platinum, rhodium or nickel, X is previously defined, y is an integer equal to 1 to 3 inclusive and preferably 2. Surprisingly, the supported transition metal complexes having chemically combined groups of formula (4), which are preferably silicon supported, have been found to be recyclable and regenerable at the termination of the reaction.

There is provided by the present invention, a method for making silylated aromatic organic materials having at least one nuclear-bound silicon atom attached to an aromatic organic group by a carbon-silicon linkage comprising,

(A) effecting reaction between a halogenated polysilane of formula (1) and aromatic acylhalide of formula (2) in the presence of an effective amount of a supported transition metal complex having chemically combined groups of formula (4), and

(B) recovering silylated aromatic organic material from the mixture of (A).

Some of the supported transition metal complexes which can be used in the practice of the present invention are shown by A.G. Allum et al., "Supported Transition Metal Complexes II Silica as the Support", Journal of Organometallic Chemistry 87 (1975), pp. 203-216, and M. Capka et al., "Hydrosilylation Catalyzed By Transition Metal Complexes Coordinately Bound to Inorganic Supports", Collection Czechoslov. Chem. Commun., Vol. 39, pp.154 (1974). Additional supported transition metal catalysts which can be used are shown by U.S-A-4,083,803, Oswald et al., U.S-A-3,487,112, U.S-A-3,726,809, and U.S-A-3,832,404. The silica substrate can be in the form of silica extrudate.

Among the halogenated polysilanes which are included within formula (1) there are, for example, chloropentamethyldisilane, 1,2-dichlorotetramethyldisilane, 1,1-dichlorotetramethyldisilane, 1,1,2-trimethyltrichlorodisilane, 1,1,2,2-tetrachlorodimethyldisilane, hexachlorodisilane, 1,2-dibromotetramethyldisilane, 1,2-difluorotetramethyldisilane, 1,1,2,2,4,4,5,5-octamethyl-1,2,4,5-tetrasilacyclohexasiloxane, 1-chlorononamethyltetrasil-3-oxane, 1,2-dichloro-1,2-diphenyldimethyldisilane, etc.

Some of the aromatic acyl halides which are included within formula (2) are, for example, monofunctional aromatic acyl halide such as benzoyl chloride, trimellitic anhydride acid chloride, chlorobenzoyl chloride, anisoyl chloride, nitrobenzoyl chloride, toluoyl chloride, cyanobenzoyl chloride, bromobenzoyl chloride, dimethylaminobenzoyl chloride, N-n-butyl trimellitic imide acid chloride, etc.

Polyfunctional aromatic polyacyl halides which are included within formula (2) are, for example, terephthaloyl chloride, phthaloyl chloride, isophthaloyl chloride, etc.

There are included among organic silanes which can be made in accordance with the practice of the method of the present invention compounds such as phenyldimethylchlorosilane, phenylmethyldichlorosilane, chlorophenyldimethylchlorosilane, anisyldimethylchlorosilane, nitrophenyldimethylchlorosilane, tolyldimethylchlorosilane, cyanophenyldimethylchlorosilane, 4-dimethylchlorosilylphthalic anhydride, N-n-butyl-4-dimethylchlorosilyl phthalimide, bromophenyldimethylchlorosilane, etc.

Radicals which are included within R of formula (1) are, for example, $C_{(1-8)}$ alkyl radicals, for example methyl, ethyl, propyl, butyl, pentyl, etc., chlorobutyl, trifluoropropyl, cyanopropyl; aryl radicals, for example phenyl, xylyl, tolyl, naphthyl, halogenated aryl radicals such as chlorophenyl, dichlorophenyl, trichlorophenyl, fluorophenyl, difluorophenyl, bromophenyl; nitro and polynitro aromatic radicals as well as arylether radicals, for example, anisole, ethoxyphenyl, propoxyphenyl, diphenylether, cyanophenyl, etc.

Some of the monovalent aromatic radicals and substituted aromatic radicals which can be included within $R^1$ of formula (2) are, for example, phenyl, xylyl, tolyl, naphthyl; halogenated aromatic radicals such as chlorophenyl, dichlorophenyl, trichlorophenyl, etc., fluorophenyl, difluorophenyl, etc., bromophenyl, dibromophenyl, etc.; nitro and polynitro aromatic radicals as well as aryl ether radicals for example, anisoyl, ethoxyphenyl, propoxyphenyl, diphenylether. Additional substituted aromatic radicals which can be included within $R^1$ are for example, cyanophenyl, polycyanophenyl, as well as phthalimido radicals.

Typical of the chemically combined groups of formula (4) are, for example, where $R^2$ is selected from ethylene, propylene, butylene, octylene, tetradecylene, phenethyl, propylphenyl, butylphenyl and hexyl-

phenyl; $R^3$ and $R^4$ are selected from methyl, ethyl, propyl, butyl, and isomers thereof, cyclopentyl, cyclohexyl, phenyl, tolyl, xylyl, mesityl and anisyl; and X is selected from Cl, Br, I. Further examples of the catalyst are,

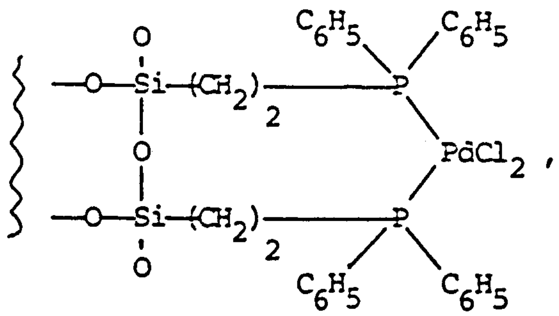

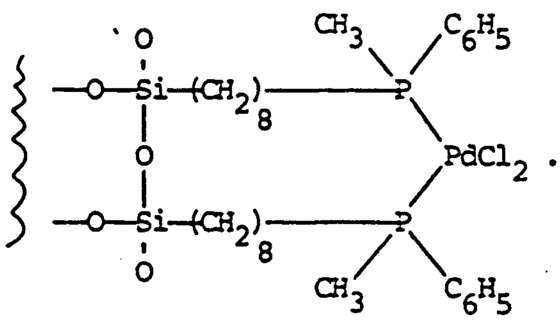

There are also included among the aromatic silylation reaction products silarylene halides, such as 1,4-(bis-chlorodimethylsilyl)benzene. The synthesis of such silphenylene compounds can be made from terephthaloyl chloride and 1,2-dichlorotetramethyldisilane.

An effective amount of silica-supported transition metal catalyst is an amount of silica-supported transition metal catalyst which is sufficient to provide from 0.005% by weight to 20% by weight of transition metal based on the weight of aromatic acyl halide.

In the practice of the present invention, reaction is initiated between the halogenated polysilane of formula (1) and the aromatic acylhalide of formula (2) in the presence of an effective amount of the silica-supported transition metal catalyst. Reaction can be carried out under a variety of conditions. For example, the reactants can be heated to the desired temperature in the absence of solvent, while being stirred under an inert atmosphere or in the presence of a nonreactive solvent with a boiling point greater than 100 ° C to 300 ° C. Nonreactive solvents which can be used are, for example, o-xylene, anisole, mesitylene, or nonhalogenated aromatic or aliphatic solvents.

Depending upon the value of m in formula (2) for the aromatic acylhalide, and whether the halogenated polysilane is a monofunctional or polyfunctional halopolysilane, molar proportions of the halogenated polysilane and the aromatic acylhalide can vary widely. There should be used sufficient halogenated polysilane to provide at least 2 gram atoms of silicon of the halogenated polysilane, per mole of the aromatic acylhalide.

Temperatures which can be utilized in effecting reaction between the halogenated polysilane and the aromatic acylhalide are, for example, 110 ° C and preferably 135-145 ° C depending upon the nature of the reactants and conditions utilized, such as with or without organic solvent, as previously discussed.

Organic silanes made in accordance with the practice of the present invention can be hydrolyzed to a variety of valuable intermediates, such as silarylenesilane diols, bis(siloxaneanhydrides), bis(siloxaneimides), etc.

In order that those skilled in the art will be better able to practice the present invention, the following examples are given by way of illustration and not by way of limitation. All parts are by weight.

EXAMPLE 1

There was added 17.67 grams (0.10 moles) of palladium dichloride to a mixture of 75 grams (0.20 moles) of diphenylphosphinoethyltriethoxysilane dissolved in 200 ml of dry dichloroethane. The diphenylphosphinoethyltriethoxysilane was prepared in accordance with the method of A.G. Allum et al., Journal Organomet.Chem. 87, 203 (1975). The mixture of palladium dichloride and the triphenylphosphinoethyltriethoxysilane was heated to reflux until all of the suspended palladium dichloride was consumed. The resulting orange solution was alluted with 100 ml hexane. Upon cooling there was formed 89.9 grams (97%) of bis(diphenylphosphinoethyltriethoxysilyl)palladium dichloride as yellow crystals.

There was added 585 grams of 3,175 mm (1/8 in.) diameter silica extrudates to 60.7 grams of bis-(diphenylphosphinoethyltriethoxysilyl)palladium dichloride dissolved in 500 ml of methylene chloride. The color of the resulting solution changed and the extrudates were yellow orange. The catalyst was filtered and washed with methylene chloride and air-dried at 125 °C for two hours. Extrudates were then added to 700 ml of 5% aqueous HCl and allowed to stand for 12 hours followed by filtration, washing with water and subsequently acetone, ether and pentane. The resulting catalyst was then air-dried at 125 °C for eight hours. The catalyst was then immersed in an excess of hexamethyldisilazane for two hours at room temperature, followed by filtration, washing with methylene chloride and pentane and drying under vacuum at 80 °C for 15 hours. There was obtained a silica-supported palladium silylation catalyst having a plurality of chemically combined groups of the formula,

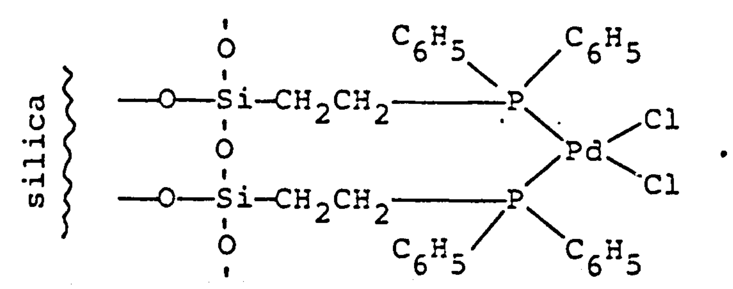

Chemical analysis showed that the catalyst contained 2.02% by weight of palladium.

There was heated neat to 145 °C, a mixture of 562 grams (2.67 moles) trimellitic anhydride acid chloride, 700 grams (2.67 moles) of 1,2-dichlorotetramethyldisilane and 40 grams (0.3 mole %) of the above silylation catalyst having 2.02% by weight of palladium. Rapid outgassing of carbon monoxide occurred from the catalyst surface and dimethyldichlorosilane formed during reaction was continuously removed by distillation. After heating the mixture for 12 hours at 145 °C, gas chromatography indicated complete reaction of the trimellitic anhydride acid chloride. The resulting mixture was then decanted. Vacuum distillation resulted in the production of 169 grams (73% yield) of 4-chlorodimethylsilylphthalic anhydride as a clear liquid, b.P. 141 °C/13.3 Pa (0.1 torr).

EXAMPLE 2

The procedure of Example 1 was repeated for making the silica-supported palladium catalyst except that there was used 89.9 grams (0.16 mole) of bis(diphenylphosphinoethyl)triethoxysilane and 1,064 grams of 200-300 mesh silica. Based on method of preparation and chemical analysis, there was obtained a silica-supported palladium catalyst having about 1% by weight of palladium.

A reaction mixture containing 203 grams (1.0 mole) of terephthaloylchloride and 187 grams (1.0 mole) of 1,2-dichlorotetramethyldisilane was stirred and heated neat to 245 °C until a homogeneous mixture was obtained. There was added to the mixture, 32 grams of the silica-supported 1% palladium catalyst. Rapid evolution of carbon monoxide gas occurred and dimethyldichlorosilane was removed continuously as it formed. After 12 hours at 145 °C NMR analysis showed complete reaction of the terephthaloylchloride. The reaction mixture was cooled to room temperature and filtered under nitrogen to remove the catalyst. Distillation of the mixture provided 174 grams (75%) yield of 4-chlorodimethylsilylbenzoylchloride as a clear liquid, boiling point 97 °C/13.3 Pa (0.1 torr)

EXAMPLE 3

The procedure of Example 2 was repeated utilizing 10 grams (4.93 x $10^{-2}$ moles) of terephthaloylchloride, 9.2 grams (4.93 x $10^{-2}$ moles) of 1,2-dichlorotetramethyldisilane and 3 grams of the 1% palladium (II) on silica from Example 2. The mixture was heated to 145 ° C neat. There was also utilized in the mixture, an unreactive GC internal standard, tetradecane (3.16 grams, 1.63 x $10^{-2}$ moles). After three hours, the reaction was stopped and the progress of the reaction was monitored by gas chromatography. The same procedure was repeated except that in place of the 3 grams of reused silica-supported 1% palladium prepared in Example 2, there was used 3 grams of a 1% commercially available palladium on carbon, Johnson-Mathey Corporation TS2276. An additional reaction was also run employing 3 grams of a commercially-available silica-supported 1% palladium catalyst from Engelhardt Company. It was determined that the latter commercially available silica-supported palladium catalyst had the palladium absorbed onto the surface of the silica instead of being chemically combined, as shown in Examples 1 and 2.

The various mixtures were heated continuously for 3 hours under neat conditions and the progress of the respective reactions was monitored by gas chromatography. The catalysts were then filtered, washed with methylene chloride, dried under nitrogen and reintroduced into fresh aliquots of the respective reaction mixtures. It was found that the reaction mixture containing the commercially available silica-supported palladium catalyst which was absorbed onto the surface of the silica, could not be satisfactorily monitored, as little or no reaction had occurred. However, the results of five runs were monitored, as shown in the drawing, comparing the reaction mixture catalyzed by the silica-supported palladium catalyst having palladium chemically combined to silica through connecting groups of formula (4), "Rich" and the reaction mixture containing the "Commercial" palladium catalyst using carbon as a support. After three runs, the respective catalysts were removed from the mixtures, slurried in carbon tetrachloride, and gaseous chlorine was introduced. The Rich catalyst of the present invention turned yellow-orange in color and the rate of color change could be increased by mildly heating the carbon tetrachloride following filtration and washing with methylenechloride. After the catalysts were dry, they were reintroduced in fresh aliquots of starting materials. It was found that the "reactivated" catalyst of the present invention "Rich" showed 85% of its initial activity from the first run, while no change was noted in the commercially available catalyst.

EXAMPLE 4

After several runs, the silica-supported catalyst of Example 1, a batch of 2% palladium on 3.175 mm (1/8") silica extrudates, had been completely reduced to palladium black and was no longer active in the silylation process. The spent silica-supported palladium catalyst was then slurred in a 5% aqueous solution of copper chloride for 10 minutes and oxygen was then bubbled through the mixture. An exothermic reaction occurred and the silica-supported palladium catalyst turned from black to yellow-orange in color. The mixture was then filtered and the silica-supported palladium catalyst was then analyzed. Elemental analysis showed that the spent catalyst had 1.3% palladium while the original was 2.02% palladium. After the spent catalyst was reoxidized, the reactivated catalyst contained 0.7% palladium and 1% copper.

A reaction mixture containing 4.93 x $10^{-2}$ moles of trimellitic anhydride acid chloride and 4.93 x $10^{-3}$ moles of 1,2-dichlorotetramethyldisilane was heated to 145 ° C in the presence of 3 grams of the above-described silica-supported reactivated catalyst. After 3 hours at 145 ° C, 998 chromatography indicated complete reaction of the trimellitic anhydride acid chloride. The resulting mixture was then decanted and vacuum distilled to provide 7.23 grams or a 61% yield of 4-chlorodimethylsilylphthalic anhydride.

EXAMPLE 5

The procedure of Example 2 was repeated for making the 1% by weight of palladium catalyst.

A reaction mixture containing 3 gram (2.13 x $10^{-2}$ mole) of benzoyl chloride and 4.85 grams (2.13 mole) or sym-tetrachlorodimethyl disilane was stirred and heated to 130-135 ° C neat until a homogeneous mixture was formed. There was added to the mixture 2.2 g of 1% palladium on 75-50µm (200-300 mesh) silica. Rapid evolution of carbon monoxide occurred and trichloromethylsilane was removed continuously as it formed. After 15 hours at 130 ° C, NMR analysis showed complete reaction of benzoyl chloride.

The above reaction was repeated with other substrates, as shown by the following equation and Table, where Ar is phenyl, or substituted phenyl:

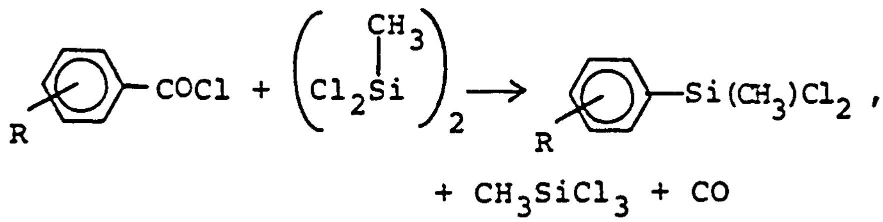

TABLE

| Substrate where R = | Mole % $ArSiCH_3Cl_2$ | Mole % ArCl |
|---|---|---|
| H | 90 | 10 |
| P-Cl | 89 | 11 |
| P-COCl | 88 | 12 |
| 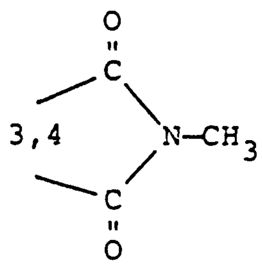 | 36 | 7 |
| 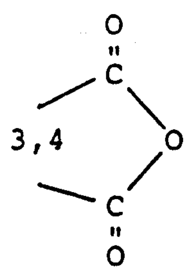 | 95 | 5 |

The above results show that the silica supported catalyst of the present invention having chemically combined groups of formula (4), has superior selectivity when used to make polyfunctional aryl silanes from aryl substrates substituted with a variety of activating groups employing polysilanes having silicon atoms with at least two halogen radicals per silicon.

In contrast, a similar silylation reaction was conducted with the same substrates using the 1% commercially available palladium on carbon catalyst of Example 3. It was found that a wide variation resulted in selectivity in accordance with the substituent R on the phenyl ring. For example, when R was hydrogen, only a trace of the desired phenyl silane was obtained while a 78% yield was obtained with chloroacylphthalicanhydride. A 67% yield was obtained with terephthaloyl chloride.

## Claims

1. A method for making silylated aromatic organic material having at least one nuclear-bound silicon atom attached to an aromatic group by a carbon-silicon linkage comprising,
(A) effecting reaction between a halogenated polysilane of the formula,

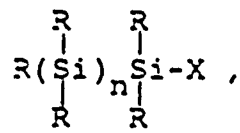

and aromatic acylhalide of the formula,

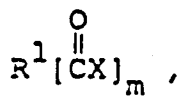

in the presence of an effective amount of a silica-supported transition metal complex having chemically combined groups of the formula,

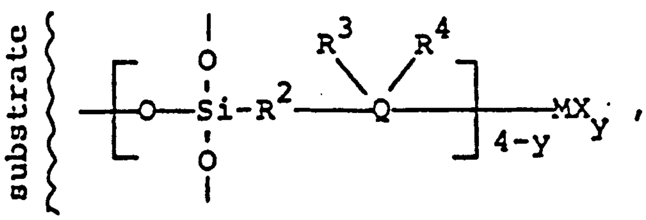

and
(B) recovering the silylated aromatic organic material from the mixture of (A),
where X is halogen, M is a transition metal selected from palladium, platinum, or nickel, Q is a nitrogen or phosphorous radical, y is an integer having a value of from 1 to 3 inclusive, R is selected from X, hydrogen, $C_{(1-13)}$ monovalent hydrocarbon radicals, substituted $C_{(1-13)}$ monovalent hydrocarbon radicals, and divalent -O-, -S-radicals and mixtures thereof which can form ≡SiOSi≡ and ≡SiSSi≡ connecting groups, $R^1$ is a $C_{(6-20)}$ monovalent or polyvalent aromatic organic radical, $R^2$ is a divalent $C_{(2-14)}$ organic radical, and $R^3$ and $R^4$ are monovalent $C_{(1-14)}$ alkyl or aryl radicals.

2. A method in accordance with claim 1, where the halogenated polysilane is 1,1,2,2-tetrachlorodimethyldisilane.

3. A method in accordance with claim 1, where the aromatic acylhalide is trimelliticanhydride acid chloride.

4. A method in accordance with claim 1, where the aromatic acylhalide is terephthaloylchloride.

5. A method in accordance with claim 1, where the aromatic acylhalide is isophthaloyl chloride.

6. A method in accordance with claim 1, where the halogenated polysilane is 1,2-dichlorotetramethyldisilane.

7. A method in accordance with claim 1, conducted in a continuous manner.

8. A method in accordance with claim 1, where the silyated aromatic organic material is organic silane.

**9.** A method in accordance with claim 1, where the silyated aromatic organic material is a silarylene.

**10.** A method in accordance with claim 8, where the organic silane is 4-chlorodimethylsilylphthalic anhydride.

**11.** A method in accordance with claim 8, where the organic silane is 4-chlorodimethylsilylbenzoyl chloride.

**12.** A method in accordance with claim 8, where the organic silane is N-butyl-4-chlorodimethylsilylphthalimide.

**13.** A method in accordance with claim 9, where the silarylene is 1,4-dichlorosilylpbenylene.

**14.** A method in accordance with claim 1, where the aromatic acylhalide is 3-nitrobenzoyl chloride.

**15.** A method in accordance with claim 1, where the aromatic acylhalide is 4-nitrobenzoyl chloride.

**16.** A method in accordance with claim 1, where the aromatic acylhalide is benzoyl chloride.

**17.** A method in accordance with claim 1, where the catalyst is chemically reactivated with $Cl_2$ or $Cu^{II}Cl_2/O_2$.

**Patentansprüche**

**1.** Ein Verfahren zum Herstellen eines silylierten aromatischen organischen Materials mit mindestens einem kerngebundenen Siliciumatom, das durch Kohlenstoff-Silicium-Bindung an eine aromatische Gruppe gebunden ist, umfassend

(A) Ausführen einer Umsetzung zwischen einem halogenierten Polysilan der Formel

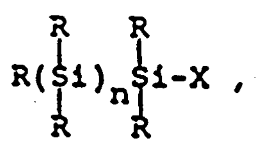

und aromatischem Acylhalogenid der Formel

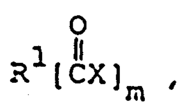

in Gegenwart einer wirksamen Menge eines von Siliciumdioxid getragenen Übergangsmetall-Komplexes mit chemisch verbundenen Gruppen der Formel

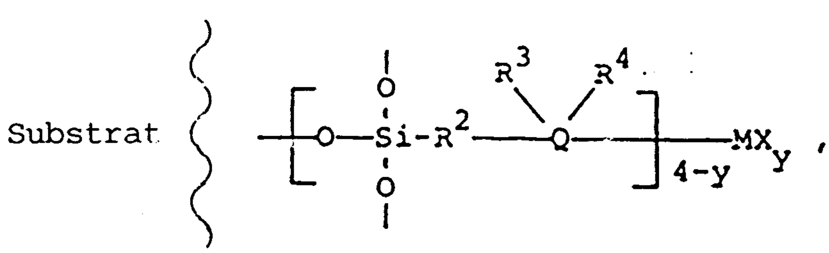

und

(B) Gewinnen des silylierten aromatischen organischen Materials aus der Mischung von (A),
worin X Halogen ist, M ein Übergangsmetall ist, ausgewählt aus Palladium, Platin oder Nickel, Q ein stickstoff- oder phosphorhaltiger Rest ist, y eine ganze Zahl mit einem Wert von 1 bis einschließlich 3 ist, R ausgewählt ist aus X, Wasserstoff, einwertigen $C_{(1-13)}$-Kohlenwasserstoffresten, substituierten einwertigen $C_{(1-13)}$-Kohlenwasserstoffresten und zweiwertigen -O-, -S-Resten und deren Mischungen, die verbindende ≡SiOSi≡ und ≡SiSSi≡ Gruppen bilden können, $R^1$ ein einwertiger oder mehrwertiger aromatischer organischer $C_{(6-20)}$- Rest ist, $R^2$ ein zweiwertiger organischer $C_{(2-14)}$- Rest ist und $R^3$ und $R^4$ einwertige $C_{(1-14)}$-Alkyl- oder Arylreste sind.

**2.** Ein Verfahren gemäß Anspruch 1, worin das halogenierte Polysilan 1,1,2,2-Tetrachlordimethyldisilan ist.

**3.** Ein Verfahren gemäß Anspruch 1, worin das aromatische Acylhalogenid Trimellitsäureanhydrid-Säurechlorid ist.

**4.** Ein Verfahren gemäß Anspruch 1, worin das aromatische Acylhalogenid Terephthaloylchlorid ist.

**5.** Ein Verfahren gemäß Anspruch 1, worin das aromatische Acylhalogenid Isophthaloylchlorid ist.

**6.** Ein Verfahren gemäß Anspruch 1, worin das halogenierte Polysilan 1,2-Dichlortetramethyldisilan ist.

**7.** Ein Verfahren gemäß Anspruch 1, das in einer kontinuierlichen Weise ausgeführt wird.

**8.** Ein Verfahren gemäß Anspruch 1, worin das silylierte aromatische organische Material organisches Silan ist.

**9.** Ein Verfahren gemäß Anspruch 1, worin das silylierte organische Material ein Silarylen ist.

**10.** Ein Verfahren gemäß Anspruch 8, worin das organische Silan 4-Chlordimethylsilylphthalsäureanhydrid ist.

**11.** Ein Verfahren gemäß Anspruch 8, worin das organische Silan 4-Chlordimethylsilylbenzoylchlorid ist.

**12.** Ein Verfahren gemäß Anspruch 8, worin das organische Silan N-Butyl-4-chlordimethylsilylphthalimid ist.

**13.** Ein Verfahren gemäß Anspruch 9, worin das Silarylen 1,4-Dichlorsilylphenylen ist.

**14.** Ein Verfahren gemäß Anspruch 1, worin das aromatische Acylhalogenid 3-Nitrobenzoylchlorid ist.

**15.** Ein Verfahren gemäß Anspruch 1, worin das aromatische Acylhalogenid 4-Nitrobenzoylchlorid ist.

**16.** Ein Verfahren gemäß Anspruch 1, worin das aromatische Acylhalogenid Benzoylchlorid ist.

**17.** Ein Verfahren gemäß Anspruch 1, worin der Katalysator chemisch mit $Cl_2$ oder $Cu^{II}Cl_2/O_2$ reaktiviert wird.

## Revendications

**1.** Procédé de préparation d'un produit organique aromatique silylé, ayant au moins un atome de silicium lié au noyau, attaché à un groupe aromatique par une liaison carbone-silicium, qui comprend les étapes consistant à :

(A) effectuer la réaction entre un polysilane halogéné de formule :

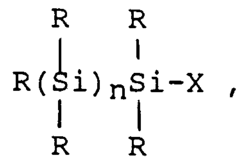

et un halogénure d'acyle aromatique, de formule :

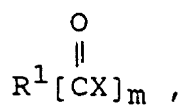

en présence d'une quantité efficace d'un complexe de métal de transition, fixé sur un support de silice, présentant des groupes chimiquement combinés de formule :

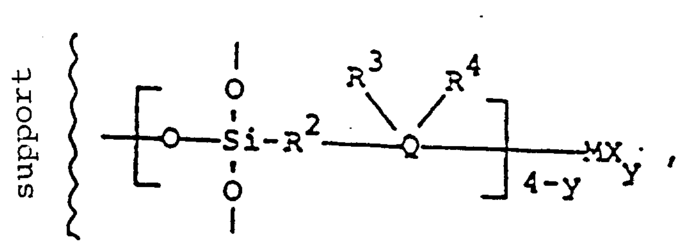

et

(B) récupérer le produit organique aromatique silylé à partir du mélange de (A),

X représentant un atome d'halogène, M représentant un métal de transition choisi parmi le palladium, le platine et le nickel, Q représentant un radical azoté ou phosphoré, y représentant un nombre entier ayant une valeur de 1 à 3, bornes incluses, R étant choisi parmi X, l'atome d'hydrogène, les groupes hydrocarbonés monovalents en $C_1$ à $C_{13}$, les groupes hydrocarbonés monovalents en $C_1$ à $C_{13}$ substitués, et les radicaux divalents -O-, -S- et leurs mélanges, qui peuvent former des groupes de raccordement ≡SiOSi≡ et ≡SiSSi≡, $R^1$ représentant un groupe organique aromatique, monovalent ou polyvalent, en $C_6$ à $C_{20}$, $R^2$ représentant un groupe organique divalent en $C_2$ à $C_{14}$, et $R^3$ et $R^4$ représentant des groupes monovalents, alkyle en $C_1$ à $C_{14}$ ou aryle, dans les formules précédentes.

**2.** Procédé selon la revendication 1, dans lequel le polysilane halogéné est le 1,1,2,2-tétrachlorodiméthyldisilane.

**3.** Procédé selon la revendication 1, dans lequel l'halogénure d'acyle aromatique est le chlorure d'acide de l'anhydride trimellitique.

**4.** Procédé selon la revendication 1, dans lequel l'halogénure d'acyle aromatique est le chlorure de téréphtaloyle.

**5.** Procédé selon la revendication 1, dans lequel l'halogénure d'acyle aromatique est le chlorure d'isophtaloyle.

**6.** Procédé selon la revendication 1, dans lequel le polysilane halogéné est le 1,2-dichlorotétraméthyldisilane.

**7.** Procédé selon la revendication 1, qui est effectué d'une manière continue.

8. Procédé selon la revendication 1, dans lequel le produit organique aromatique silylé est un silane organique.

9. Procédé selon la revendication 1, dans lequel le produit organique aromatique silylé est un silarylène.

10. Procédé selon la revendication 8, dans lequel le silane organique est l'anhydride 4-chlorodiméthylsilylphtalique.

11. Procédé selon la revendication 8, dans lequel le silane organique est le chlorure de 4-chlorodiméthylsilylbenzoyle.

12. Procédé selon la revendication 8, dans lequel le silane organique est le N-butyl-4-chlorodiméthylsilylphtalimide.

13. Procédé selon la revendication 9, dans lequel le silarylène est le 1,4-dichlorosilylphénylène.

14. Procédé selon la revendication 1, dans lequel l'halogénure d'acyle aromatique est le chlorure de 3-nitrobenzoyle.

15. Procédé selon la revendication 1, dans lequel l'halogénure d'acyle aromatique est le chlorure de 4-nitrobenzoyle.

16. Procédé selon la revendication 1, dans lequel l'halogénure d'acyle aromatique est le chlorure de benzoyle.

17. Procédé selon la revendication 1, dans lequel le catalyseur est réactivé chimiquement avec $Cl_2$ ou Cu(II)$Cl_2/O_2$.

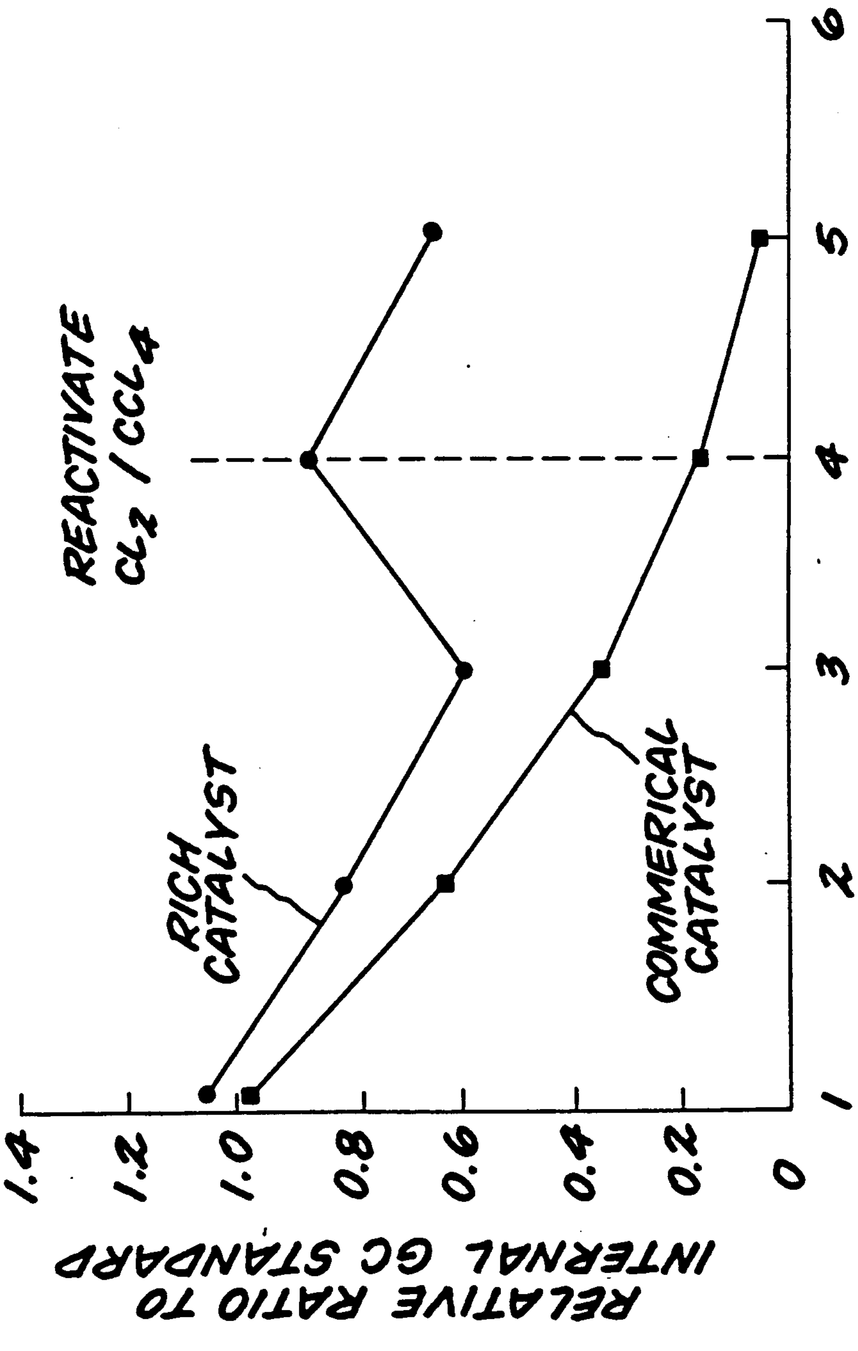
REACTIVATE
CL2 / CCL4
RICH CATALYST
COMMERICAL CATALYST
RUN NUMBER
1
2
3
4
5
6
RELATIVE RATIO TO INTERNAL GC STANDARD
0
0.2
0.4
0.6
0.8
1.0
1.2
1.4